# EUROPÄISCHE PATENTSCHRIFT

(11) **EP 0 874 167 B1**
(45) Veröffentlichungstag und Bekanntmachung des Hinweises auf die Patenterteilung: **14.01.2004**
(21) Anmeldenummer: 98103853.2
(22) Anmeldetag: 05.03.1998
(51) Int. Cl.: F16B 13/08

(54) **Spreizdübel**
Expansion dowel
Cheville d'expansion

(30) Priorität: 21.04.1997 DE 19716633; 23.05.1997 DE 19721579; 13.06.1997 DE 19725129; 02.07.1997 DE 19728073
(43) Veröffentlichungstag der Anmeldung: 28.10.1998
(73) Patentinhaber: fischerwerke Artur Fischer GmbH & Co. KG, 72178 Waldachtal (DE)
(72) Erfinder: Fischer, Artur, Prof. Dr.h.c.Dr.-Ing.E.h., 72178 Waldachtal (DE); Hayer, Horst, 72178 Waldachtal (DE)

(56) Entgegenhaltungen:
- EP-A- 0 308 620
- DE-A- 3 146 027

## Beschreibung

Die Erfindung betrifft einen Spreizdübel mit den Merkmalen des Oberbegriffs des Anspruchs 1.

Ein derartiger Spreizdübel ist bekannt aus der EP 0 308 620 A1. Der bekannte Spreizdübel weist eine Spreizhülse auf, an der durch von einer vorderen Stirnseite her angebrachte Längsschlitze Spreizzungen ausgebildet sind, an deren vorderen Stirnränder durch Ausnehmungen gebildete Zähne abstehen. Am vorderen Ende der Spreizhülse ist ein sich erweiternder Spreizkörper angeordnet, der durch Auftreiben der Spreizzungen auf den Spreizkörper diese radial auseinander spreizt. Das Auftreiben erfolgt durch Einschlagen der Spreizhülse in axialer Richtung in das Bohrloch. Der Spreizkörper muss dabei auf einem Bohrlochgrund aufsitzen.

Der bekannte Spreizdübel ist zum Setzen in einem zylindrischen Bohrloch insbesondere in Beton vorgesehen. Beim Aufspreizen der Spreizzungen prägen sich die im Bereich der vorderen Stimränder angeordneten Zähne in die Bohrlochwandung ein, so dass ein Hinterschnitt im Bohrloch gebildet wird. Der Spreizdübel wird durch radiales Andrücken der Spreizzungen an die Bohrlochwandung kraftschlüssig und durch Hintergreifen der vom Spreizdübel verursachten Hinterschneidung formschlüssig im Bohrloch verankert.

Da die im vorderen Bereich der Spreizzungen ausgebildeten Zähne radial abstehen, ergeben sich rechtwinklig zur Eintreibrichtung der Spreizhülse stehende Stirnflächen, die dem Auftreiben der Spreizhülse auf den Spreizkörper einen hohen Widerstand entgegen setzen. Zur Herstellung der Hinterschneidung und Aufspreizen des Dübels ist daher eine hohe Spreizkraft erforderlich. Der bekannte Spreizdübel hat den weiteren Nachteil, dass der Spreizkörper auf dem Bohrlochgrund aufsitzen muss und daher zur Verankerung des Dübels ein Bohrloch notwendig ist, das eine auf den Spreizdübel abgestimmte Tiefe aufweist.

Der Erfindung liegt die Aufgabe zugrunde, einen Spreizdübel der eingangs genannten Art so auszubilden, dass die zum Aufspreizen und Herstellen der Hinterschneidung im Bohrloch notwendige Eintreibkraft verringert ist, und eine Verankerung des Spreizdübels auch dann möglich ist, wenn der Spreizkörper nicht am Bohrlochgrund aufsitzt.

Diese Aufgabe wird erfindungsgemäß durch die Merkmale des Anspruchs 1 gelöst. Vordere Stirnränder der Spreizzungen des erfindungsgemäßen Spreizdübels weisen Ausnehmungen auf, so dass an den Spreizzungen nach vorn stehende Zähne gebildet sind. Ferner weist der Spreizdübel ein Gleitelement auf, das zwischen den Spreizzungen und dem Spreizkörper angeordnet ist. Durch die Ausnehmungen sind die Spreizzungen an ihren vorderen Stimrändern, also dort, wo die Aufspreizung beginnt und am größten ist, schmäler. Dies erhöht die Flächenbelastung auf eine Bohrlochwandung bei gegebener Spreizkraft, wodurch die Zähne der Spreizzungen zur Herstellung der Hinterschneidung leichter in die Bohrlochwandung eindringen. Die Verringerung der Spreizkraft durch das Gleitelement und die Ausbildung der nach vorn stehenden Zähne an den vorderen Stirnrändern der Spreizzungen verhindern ein axiales Verschieben der Spreizhülse beim Einziehen des Spreizkörpers in die Spreizhülse. Dadurch ist sichergestellt, dass die Spreizhülse in exakt der Tiefe im Bohrloch verankert wird, in die sie in das Bohrloch eingeführt wird. Es lässt sich somit vermeiden, dass die Spreizhülse nach dem Verankern aus dem Bohrloch vorsteht. Hinzu kommt der Vorteil, dass der Spreizkörper nicht auf einen Bohrlochgrund aufgesetzt werden muss, um die Spreizhülse aufzuspreizen, es braucht daher kein Bohrloch festgelegter Tiefe gebohrt zu werden. Darüber hinaus hat der erfindungsgemäße Spreizdübel den Vorteil, dass seine Spreizhülse als Blechstanzteil herstellbar ist, das rohrförmig gebogen wird. Ihre Herstellung ist dadurch schnell und preiswert möglich, die Spreizhülse muss nicht als teures Drehteil hergestellt werden.

Das Gleitelement weist zur Befestigung an der Spreizhülse nach außen abstehende Ansätze auf, die nach Art einer Nut- und Federverbindung in die Ausnehmungen zwischen deren Zähnen eingreifen. Dies hat neben der Fixierung an der Spreizhülse den Vorteil, dass die von außen sichtbaren Ansätze des Gleitelementes in den Ausnehmungen der Spreizzungen dem Spreizdübel ein optisch ansprechendes Aussehen verleihen, wenn der Kunststoff eingefärbt ist. Vorzugsweise weist das Gleitelement eine geschlossene oder auch längsgeschlitzte Hülsenform auf.

Bei einer Weiterbildung der Erfindung ist die Spreizhülse so ausgebildet, dass sie bereits im nicht aufgespreizten Zustand im Bohrloch klemmt. Sie weist zu diesem Zweck zumindest eine radiale Aufweitung, also ein Übermaß in Bezug auf das Bohrloch, auf mit der sie beim Einführen in das Bohrloch gegen eine Bohrlochwandung drückt. Vorzugsweise ist die Aufweitung an zumindest zwei einander gegenüberliegenden Spreizzungen vorgesehen. Sie kann beispielsweise auch durch eine umlaufende, ballige Aufweitung der Spreizhülse im Übergangsbereich von den Zähnen zu den Spreizzungen verwirklicht sein. Dadurch dass der erfindungsgemäße Spreizdübel bei nicht aufgespreizter Spreizhülse klemmend im Bohrloch ausgebildet ist, hält der Spreizdübel nach Einführen in das Bohrloch, er fällt beispielsweise nicht aus einem in eine Decke gebohrten Bohrloch heraus oder rutscht in ein in einen Boden gebohrtes Bohrloch hinein. Auch wird einem unbeabsichtigten axialen Verschieben des Spreizdübels im Bohrloch während des Aufspreizens entgegengewirkt. Der Spreizdübel ist durch seine klemmende Ausbildung einfacher handhabbar.

Gelegentlich kann der Fall auftreten, dass beim Aufdrehen der Mutter auf den Gewindeschaft des Spreizdübels durch erhöhte Reibung im Gewinde der Schaft mitdreht und damit ein Einziehen des Spreizkörpers in die Spreizhülse zu deren Aufweitung und Verspreizung im Bohrloch nicht möglich ist. Um dies zu vermeiden wird in einer weiteren Ausbildung der Erfindung vorgeschlagen, die Spreizhülse und den Schaft axial verschiebbar miteinander zu verbinden. Zweckmäßigerweise kann diese Verbindung bei einem Spreizdübel, dessen Schaft im Anschluss an den die Spreizhülse aufnehmenden Abschnitt auf den Durchmesser der Spreizhülse erweitert ist, in der Weise erfolgen, dass die dem Spreizkörper abgewandte Stirnseite der Spreizhülse mit einer sich in Längsrichtung erstreckenden Lasche versehen ist, die in eine entsprechende Aussparung des erweiterten Schaftes eingreift.

Die im Bohrloch beispielsweise durch geringfügiges Übermaß oder Sperrelemente drehsicher gehaltene Spreizhülse verhindert somit über die in die Aussparung des Schaftes eingreifende Lasche ein Mitdrehen des Schaftes beim Einziehen des Spreizkörpers in die Spreizhülse. Die zum Einziehen des Spreizkörpers erforderliche axiale Verschiebung des Schaftes gegenüber der Spreizhülse ist dadurch gewährleistet, dass die Länge der Lasche etwa der Länge des Spreizkonuses des Spreizkörpers entspricht.

Durch Aufbiegen der Lasche in der Weise, dass diese über den Durchmesser des erweiterten Schaftes übersteht, kann mit der Lasche gleichzeitig auch die Drehsicherung der Spreizhülse im Bohrloch bewirkt beziehungsweise verbessert werden.

In einer weiteren Ausgestaltung der Erfindung können auf der Außenfläche der Spreizzungen Nocken angeordnet sein. Es ist zweckmäßig, die Nocken sägezahnförmig auszubilden, wobei die flach abfallende Flanke zum vorderen Ende des Spreizdübels gerichtet ist. Beim Aufspreizen des Spreizdübels werden die Nocken tief in die Bohrlochwandung eingedrückt, so dass sich zusätzliche Hinterschneidungsmulden in der Bohrlochwandung bilden. Damit wird eine weitere Verbesserung des Schlupfverhaltens des Spreizdübels insbesondere bei gerissenem Beton erreicht. Tritt durch Rissbildung eine Bohrlocherweiterung ein, reicht schon eine geringe axiale Verschiebung des die Spreizhülse durchgreifenden Schaftes aus, um durch Nachrutschen des Spreizkörpers in die Spreizhülse eine erneute Verkeilung der Spreizhülse im Bohrloch zu erreichen.

Die Einziehkraft beim Aufspreizen des Spreizdübels wird durch die Nocken nur unwesentlich erhöht, wenn diese in bevorzugter Ausgestaltung auf den nach vorn stehenden Zähnen jeweils in einem Abstand zu den Ausnehmungen und den Längsschlitzen angeordnet sind.

Die Erfindung wird nachfolgend anhand dreier in der Zeichnung dargestellter Ausführungsbeispiele näher erläutert. Das Zeigen:
- Figur 1: einen erfindungsgemäßen Spreizdübel;
- Figur 2: eine Abwicklung einer Spreizhülse dieses Spreizdübels;
- Figur 3: eine Schnittdarstellung gemäß Linie VII-VII in Figur 1 in größerem Maßstab;
- Figur 4: eine abgewandelte Ausführungsform des erfindungsgemäßen Spreizdübels; und
- Figur 5 und 6: eine zweite Ausführungsform für eine drehsichere Verbindung zwischen Spreizhülse und Schaft des erfindungsgemäßen Spreizdübels.
- Figur 7: eine weitere Ausführungsform eines erfindungsgemäßen Spreizdübels.

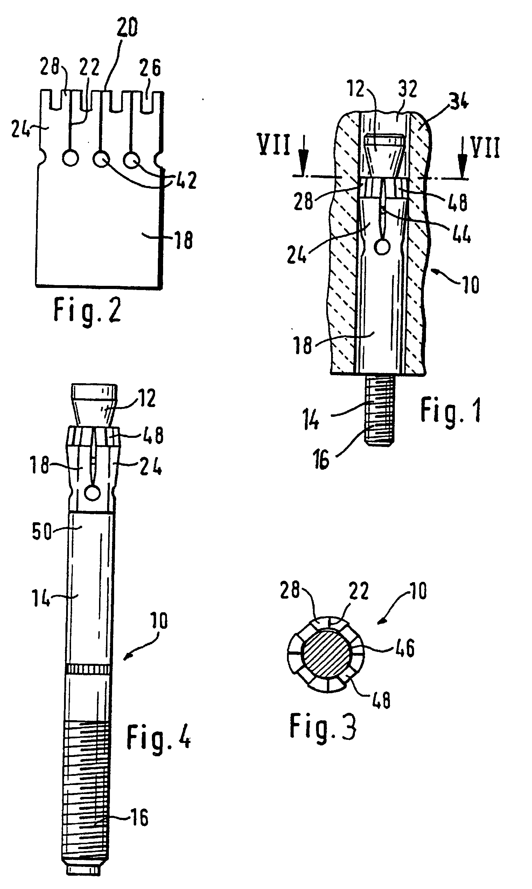

Der in Figur 1 dargestellte, erfindungsgemäße Spreizdübel 10 weist einen konischen Spreizkörper 12 auf, der an seinem verjüngten Ende einstückig mit einem Schaft 14 ist. Der Schaft 14 ist an seinem hinteren Ende mit einem Gewinde 16 versehen. Auf den Schaft 14 ist eine Spreizhülse 18 aufgesteckt. Die Spreizhülse 18 kann beispielsweise ein Drehteil sein oder aus einem Rohr hergestellt werden. Im dargestellten Ausführungsbeispiel ist die Spreizhülse 18 als Blechstanzteil hergestellt, dessen Abwicklung in Figur 2 gezeigt ist und welches zu der rohrförmigen Spreizhülse 18 gebogen wird.

In ihrer Abwicklung hat die Spreizhülse 18 die Form eines Rechtecks. Die Spreizhülse 18 ist mit an einem vorderen Stirnrand 20 beginnenden Längsschlitzen 22 versehen, die etwa die Länge des Spreizkörpers 12 haben. Durch diese Längsschlitze 22 sind nach vorn stehende Spreizzungen 24 an der Spreizhülse 18 gebildet. Durch Ausnehmungen 26 im vorderen Stirnrand 20 der Spreizhülse 18 sind nach vorn stehende Zähne 28 an den Spreizzungen 24 gebildet. Die Zähne 28 sind im dargestellten Ausführungsbeispiel rechteckförmig. Die Längsschlitze 22 enden an Stanzlöchern 42, welche eine Biegelinie definieren.

Die Spreizzungen 24 mit ihren Zähnen 28 sind ballig nach außen gewölbt ausgebildet (Figur 1). Ihre größte radiale Aufweitung weisen sie in einem Fußbereich der Zähne 28, also am Übergang von den Zähnen 28 zu den Spreizzungen 24 auf. Auf diese Weise liegt die Spreizhülse 18 mit ihren Spreizzungen 24 bereits im nicht aufgespreizten Zustand elastisch federnd im Bohrloch 32 an. Der Spreizdübel 10 ist auf diese Weise bis zum Aufspreizen im Bohrloch 32 gehalten, er fällt beispielsweise nicht aus einem in einer Decke angebrachten Bohrloch 32 heraus.

Des weiteren weist der in Figuren 1 und 3 dargestellte, erfindungsgemäße Spreizdübel 10 ein hülsenförmiges, mit einem Längsschlitz 44 versehenes Gleitelement 46 auf, das zwischen dem Spreizkörper 12 und den Spreizzungen 24 und Zähnen 28 einliegt.

Anstelle eines einstückigen Gleitelementes 46 ist es auch denkbar, mehrere Gleitelemente vorzusehen, die beispielsweise jeweils nur über einen Teil des Umfangs reichen. Das Gleitelement 46 besteht aus Kunststoff. Es verringert die Reibung zwischen den Spreizzungen 24 mit ihren Zähnen 28 und dem Spreizkörper 12 beim Aufspreizen. Hauptzweck ist allerdings, ein Fressen oder Festkorrodieren der Spreizzungen 24 und Zähne 28 auf dem Spreizkörper 12 dauerhaft zu verhindern, damit der Spreizkörper 12 in axialer Richtung in der Spreizhülse 18 auch nach langjährigem Gebrauch des Spreizdübels 10 verschiebbar bleibt, um somit das Nachspreizverhalten des Spreizdübels 10 dauerhaft sicherzustellen.

Das hülsenförmige Gleitelement 46 weist nach außen abstehende Ansätze in Form von Längsrippen 48 auf, die nach Art einer Nut- und Federverbindung in die Ausnehmungen 26 der Spreizzungen 24 eingreifen und dadurch das Gleitelement 46 an der Spreizhülse 18 fixieren. Die Längsrippen 48 verhindern, daß sich das Gleitelement 46 beim Aufgleiten auf den Spreizkörper 12 während des Aufspreizens gegenüber der Spreizhülse 18 verschieben.

Zum Verankern wird der erfindungsgemäße Spreizdübel 10 in ein zylindrisches Bohrloch 32 beispielsweise in einem Körper 34 aus Beton eingeführt. Durch Aufschrauben einer Mutter (nicht dargestellt) auf das Gewinde 16 des Schafts 14 wird der mit ihm einstückige Spreizkörper 12 zwischen die Spreizzungen 24 der Spreizhülse 18 eingezogen. Die Mutter stützt sich dabei gegen die Spreizhülse 18 ab. Beim Einziehen spreizt der Spreizkörper 12 zunächst die Zähne 28 auseinander und drückt sie in eine Wandung des Bohrlochs 32 ein. Da die Zähne 28 die Bohrlochwandung auf einer kleinen Fläche beaufschlagen, ist die Flächenbelastung hoch und es genügt eine geringe Spreizkraft, um die Zähne 28 in die Bohrlochwandung zu drücken. Die Zähne 28 bewirken eine Hinterschneidung im Bohrloch 32, an der die Spreizhülse 18 formschlüssig fixiert ist. Durch weiteres Anziehen der Mutter wird der Spreizkörper 12 tiefer zwischen die Spreizzungen 24 eingezogen und spreizt die Spreizzungen 24 auseinander. Dabei werden die Spreizzungen 24 gegen die Bohrlochwandung gedrückt, was einen Kraftschluß des Spreizdübels 10 im Bohrloch 32 bewirkt. Des weiteren werden die Spreizzungen 24 in die Bohrlochwandung eingedrückt und die Zähne 28 tiefer in die Bohrlochwandung eingedrückt. Der Hinterschnitt wird dadurch vergrößert und der Formschluß des Spreizdübels 10 im Bohrloch 32 verbessert. Mit dem erfindungsgemäßen Spreizdübel 10 kann ein beispielsweise durchbohrtes Bauteil (nicht dargestellt) am Betonkörper 34 befestigt werden.

Die Zähne 28 der Spreizzungen 24 erhöhen die Flächenpressung und erleichtern dadurch das Eindringen in den Körper 34 aus Beton insbesondere im Bereich des vorderen Stimrandes 20, wo die Spreizzungen 24 mit ihren Zähnen 28 am tiefsten in den Betonkörper 34 eindringen.

Die Anzahl der Zähne 28 kann geringer oder größer als in der Zeichnung dargestellt sein, ebenso läßt sich die Form der Zähne 28 und deren Breite ändern. Der erfindungsgemäße Spreizdübel 10 weist ein Nachspreizverhalten auf: Erweitert sich das Bohrloch 32 beispielsweise infolge einer Rißbildung im Körper 34 aus Beton, wird der Spreizkörper 12 bei einer Zugbelastung an seinem Schaft 14 durch das angebrachte Bauteil tiefer zwischen die Spreizzungen 24 eingezogen und spreizt diese welter auseinander. Der Spreizdübel 10 ist zugzonentauglich.

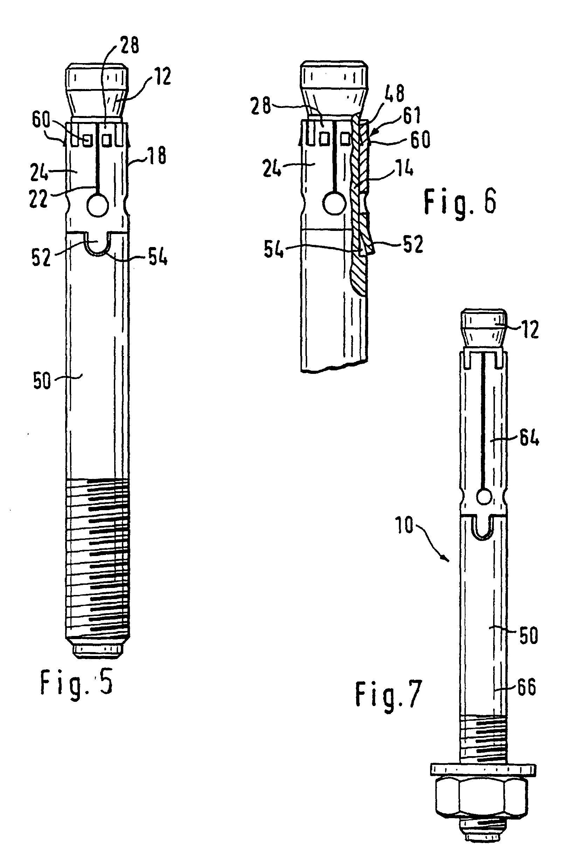

Figur 4 zeigt eine abgewandelte Ausführungsform des in Figuren 1 und 3 dargestellten Spreizdübels 10. Die Spreizhülse 18 dieses Spreizdübels 10 ist kürzer ausgebildet, sie ist wenig länger als ihre Spreizzungen 24. Der Schaft 14 des Spreizkörpers 12 erweitert sich im Anschluß an die Spreizhülse 18 an einer Ringstufe 50 auf einem dem Durchmesser der Spreizhülse 18 entsprechenden Durchmesser. Das Gewinde 16 am Ende des Schaftes 14 zur Befestigung eines nicht dargestellten Gegenstandes weist somit einen größeren Durchmesser als die Gewinde 16 des in Figuren 1 und 3 dargestellten Spreizdübels 10 auf. Vorteil dieser Ausgestaltung der Erfindung ist insbesondere die durch den größeren Schaftdurchmesser erhöhte Festigkeit gegen Scherung, d.h. gegen eine Belastung des Spreizdübels 10 durch einen mit ihm befestigten Gegenstand quer zu seiner Längsachse. Da die Spreizhülse 18 aufgrund ihrer radialen Aufweitung im Bohrloch klemmt, ist es möglich, sie durch ein Ziehen des Spreizkörpers 10 aufzuspreizen, ohne an der Spreizhülse 18 gegenzuhalten.

In den Figuren 5 und 6 ist eine die Verdrehung zwischen der Spreizhülse 18 und dem erweiterten Schaft 50 verhindernde Verbindung dargestellt, die jedoch die axiale Verschiebung des Schaftes 14 gegenüber der Spreizhülse 18 beim Einziehen des Spreizkörpers 12 in die Spreizhülse 18 zuläßt. Die Verbindung wird über eine Lasche 52 erreicht, die an der dem Spreizkörper abgewandten Stirnseite der Spreizhülse angeordnet ist und die in eine entsprechende Aussparung 54 des erweiterten Schaftes 50 eingreift. Um während des gesamten Aufspreizvorganges die Drehsicherung zwischen der Spreizhülse 18 und dem Schaft 50 aufrecht zu erhalten, weist die Lasche 52 eine Länge auf, die etwa der Länge des Spreizkonuses des Spreizkörpers 12 entspricht.

Die Drehsicherung der Spreizhülse 18 im Bohrloch kann beispielsweise dadurch erreicht werden, daß der Außendurchmesser der Spreizhülse 18 vollständig oder teilweise durch Ausbauchungen etwas größer ist als der Bohrlochdurchmesser. Die Drehsicherung der Spreizhülse 18 kann jedoch auch mit der Lasche 52 erreicht beziehungsweise verbessert werden, indem die Lasche über den Durchmesser des erweiterten Schaftes 50 überstehend aufgebogen wird.

In Figur 5 und 6 ist eine Ausführungsform der Spreizhülse 18 dargestellt, bei der auf den Außenflächen der Spreizzungen 24 sägezahnförmige Nocken 60 angeordnet sind. Die Nocken 60 sind durch Ausprägungen gebildet, wobei die flach abfallende Flanke 61 zum vorderen Ende des Spreizdübels gerichtet ist. Die Nocken 60 sind zweckmäßigerweise auf den nach vom stehenden Zähnen 28 jeweils in einem Abstand zu den Ausnehmungen 26 und den Längsschlitzen 22 angeordnet. Damit befinden sich die Nocken 60 in einem Bereich der Spreizhülse 18, der am stärksten aufgeweitet wird. Beim Aufspreizen graben sich die Nocken 60 tief in die Bohrlochwandung ein, so daß die steilere Flanke der Nocken 60 in Auszugsrichtung weist. Dies führt zu einer Erhöhung der Sperrwirkung, die insbesondere bei einer Bohrlocherweiterung durch Rißbildung wirksam wird.

Der in Figur 7 dargestellte, erfindungsgemäße Spreizdübel 10 weist eine verlängerte Spreizhülse 64 auf, wie ein Vergleich bspw. mit dem in Figur 5 dargestellten Spreizdübel zeigt. Die Spreizhülse 64 des in Figur 7 dargestellten Spreizdübels 10 hat in etwa die 3,5-fache Länge eines Nenndurchmessers des Spreizdübels 10. Dadurch ist der Spreizdübel 10 in der Lage, kurzzeitige, schockartige Überbeanspruchungen aufzunehmen ohne zu versagen. Auch ermöglicht die verlängerte Spreizhülse 64 eine sichere Verankerung bei Hohllagen d.h. wenn sich die Spreizhülse 64 örtlich begrenzt in einem Bereich einer Bohrlocherweiterung befindet. Der Spreizkörper 12 wird in diesem Fall tiefer in die Spreizhülse 64 eingezogen, bis er die Bohrlocherweiterung überwunden hat.

Ein glattwandiger, sich an die Spreizhülse 64 anschließender Stützabschnitt 66 des Schafts 50 weist einen dem Durchmesser der Spreizhülse 64 in etwa entsprechenden Durchmesser auf. Dieser Stützabschnitt 66 ist bei dem in Figur 7 dargestellten Spreizdübel 10 länger als die Spreizhülse 64, so daß sich der Spreizdübel 10 bei einer Querbeanspruchung auch dann noch an einer Bohrlochmündung abstützt, wenn der Spreizkörper 12 bis an das im ursprünglich abgewandte Ende der Spreizhülse 64 in die Spreizhülse 64 eingezogen worden ist.

## Patentansprüche

1. Spreizdübel (10) mit einer Spreizhülse (18), die Spreizzungen (24) an einem vorderen Ende aufweist, welche mit einem einen Konus aufweisenden Spreizkörper (12) aufspreizbar sind, wobei durch Ausnehmungen (26) an den vorderen Stirnrändern (20) der Spreizzungen (24) nach vom stehende Zähne (28) gebildet sind, **dadurch gekennzeichnet, dass** der Spreizdübel (10) ein Gleitelement (46) aufweist, das zwischen den Spreizzungen (24) und dem Spreizkörper (12) angeordnet ist und das nach außen abstehende Ansätze (48) aufweist, die nach Art einer Nut- und Federverbindung in die die Zähne (28) bildenden Ausnehmungen (26) der Spreizzungen (24) eingreifen.

2. Spreizdübel nach Anspruch 1, **dadurch gekennzeichnet, dass** das Gleitelement (46) eine Hülsenform mit nach außen abstehenden Rippen (48) aufweist.

3. Spreizdübel nach Anspruch 1, **dadurch gekennzeichnet, dass** die Spreizhülse (18) eine radiale Aufweitung aufweist, welche eine Klemmeinrichtung bildet.

4. Spreizdübel nach Anspruch 1, **dadurch gekennzeichnet, dass** sich der Schaft (14) im Anschluss an den die Spreizhülse (18) aufnehmenden Abschnitt auf den Durchmesser der Spreizhülse erweitert, und dass die dem Spreizkörper (12) abgewandte Stirnseite der Spreizhülse (18) mit einer sich in Längsrichtung erstreckenden Lasche (52) versehen ist, die in eine entsprechende Aussparung (54) des erweiterten Schaftes (50) eingreift.

5. Spreizdübel nach Anspruch 4, **dadurch gekennzeichnet, dass** die Länge der Lasche (52) etwa der Länge des Spreizkonuses des Spreizkörpers (12) entspricht.

6. Spreizdübel nach Anspruch 4, **dadurch gekennzeichnet, dass** die Lasche (52) über den Durchmesser des erweiterten Schaftes (50) überstehend aufgebogen ist.

7. Spreizdübel nach Anspruch 1, **dadurch gekennzeichnet, dass** auf der Außenfläche der Spreizzungen (24) Nocken (60) angeordnet sind.

8. Spreizdübel nach Anspruch 7, **dadurch gekennzeichnet, dass** die Nocken (60) sägezahnförmige Ausprägungen sind, wobei die flach abfallende Flanke (61) zum vorderen Ende des Spreizdübels gerichtet ist.

9. Spreizdübel nach Anspruch 7, **dadurch gekennzeichnet, dass** die Nocken (60) auf den nach vorn stehenden Zähnen (28) jeweils in einem Abstand zu den Ausnehmungen (26) und den Längsschlitzen (24) angeordnet sind.

## Claims

1. Expansible plug (10) with an expansible sleeve (18) having at a leading end expansible tongues (24) that are expandable by means of a flared expander body (12), wherein forwardly projecting teeth (28) are formed by cut-outs (26) at leading front edges (20) of the expansible tongues (24), **characterized in that** the expansible plug (10) has a low-friction element (46) which is arranged between the expansible tongues (24) and the expander body (12) and has outwardly projecting projections (48), which engage in the manner of a tongue and groove joint in the cut-outs (26) of the expansible tongues (24) forming the teeth (28).

2. Expansible plug according to claim 1, **characterized in that** the low-friction element (46) is in the form of a sleeve with outwardly projecting ribs (48).

3. Expansible plug according to claim 1, **characterized in that** the expansible sleeve (18) has a radial enlargement which forms a wedging means.

4. Expansible plug according to claim 1, **characterized in that**, adjoining the portion receiving the expansible sleeve (18), the shank (14) widens to the diameter of the expansible sleeve, and **in that** the end of the expansible sleeve (18) remote from the expander body (12) is provided with a longitudinally extending lug (52) that engages in a corresponding recess (54) of the widened shank (50).

5. Expansible plug according to claim 4, **characterized in that** the length of the lug (52) corresponds approximately to the length of the expander cone of the expander body (12).

6. Expansible plug according to claim 4, **characterized in that** the lug (52) is bent up to project beyond the diameter of the widened shank (50).

7. Expansible plug according to claim 1, **characterized in that** catches (60) are arranged on the outer surface of the expansible tongues (24).

8. Expansible plug according to claim 7, **characterized in that** the catches (60) are saw-tooth stampings, the shallower flank (61) being directed towards the leading end of the expansible plug.

9. Expansible plug according to claim 7, **characterized in that** the catches (60) are arranged on the forwardly projecting teeth (28), in each case at a distance from the cut-outs (26) and the elongate slits (22).

## Revendications

1. Cheville d'expansion (10) avec une douille d'expansion (18) qui comporte des languettes d'expansion (24) à une extrémité avant qui peuvent être expansées avec un corps d'expansion (12) comportant un cône, des dents (28) orientées vers l'avant étant formées par des creux (26) sur les bords frontaux avant (20) des languettes d'expansion (24), **caractérisée en ce que** la cheville d'expansion (10) comporte un élément coulissant (46) qui est placé entre les languettes d'expansion (24) et le corps d'expansion (12) et qui comporte des appendices (48) faisant saillie vers l'extérieur qui s'engrènent dans les creux (26) des languettes d'expansion (24) formant les dents (28) à la manière d'un raccord par languette et rainure.

2. Cheville d'expansion selon la revendication 1, **caractérisée en ce que** l'élément coulissant (46) présente une forme de douille avec des nervures (48) faisant saillie vers l'extérieur.

3. Cheville d'expansion selon la revendication 1, **caractérisée en ce que** la douille d'expansion (18) présente un élargissement radial qui forme un dispositif de serrage.

4. Cheville d'expansion selon la revendication 1, **caractérisée en ce que** la tige (14) au niveau de la jonction avec la portion dans laquelle est logée la douille d'expansion (18) s'élargit jusqu'au diamètre de la douille d'expansion et **en ce que** le côté frontal de la douille d'expansion (18) opposé au corps d'expansion (12) est muni d'une patte (52) s'étendant dans la direction longitudinale qui s'engrène dans un évidement approprié (54) de la tige élargie (50).

5. Cheville d'expansion selon la revendication 4, **caractérisée en ce que** la longueur de la patte (52) correspond à peu près à la longueur du cône d'expansion du corps d'expansion (12).

6. Cheville d'expansion selon la revendication 4, **caractérisée en ce que** la patte (52) est cintrée en saillie au-dessus du diamètre de la tige élargie (50).

7. Cheville d'expansion selon la revendication 1, **caractérisée en ce que** des ergots (60) sont disposés sur la face extérieure des languettes d'expansion (24).

8. Cheville d'expansion selon la revendication 7, **caractérisée en ce que** les ergots (60) sont des empreintes en dents de scie, le flanc tombant à plat (61) étant orienté vers l'extrémité avant de la cheville d'expansion.

9. Cheville d'expansion selon la revendication 7, **caractérisée en ce que** les ergots (60) sont disposés sur les dents (28) orientées vers l'avant, chacun à une distance des creux (26) et des fentes longitudinales (24).
